# EUROPEAN PATENT SPECIFICATION

(11) **EP 3 042 801 B1**
(45) Date of publication and mention of the grant of the patent: **27.09.2017**
(21) Application number: 15187726.3
(22) Date of filing: 30.09.2015
(51) Int. Cl.: B60N 2/16

(54) **SEAT LIFTER STRUCTURE**
SITZHEBERSTRUKTUR
STRUCTURE DE DISPOSITIF DE LEVAGE DE SIÈGE

(30) Priority: 25.11.2014 JP 2014238222
(43) Date of publication of application: 13.07.2016
(73) Proprietor: Toyota Jidosha Kabushiki Kaisha, Toyota-shi, Aichi-ken 471-8571 (JP)
(72) Inventor: INOUE, Shotaro, TOYOTA-SHI, AICHI-KEN, 471-8571 (JP); IWASAKI, Keita, TOYOTA-SHI, AICHI-KEN, 471-8571 (JP); NISHIYAMA, Yuji, TOYOTA-SHI, AICHI-KEN, 471-8571 (JP)
(74) Representative: Intès, Didier Gérard André

(56) References cited:
- EP-A1- 1 308 643
- WO-A1-2014/021582
- US-A1- 2007 137 965

## Description

### BACKGROUND

### Technical Field

The present invention relates to a seat lifter structure for adjusting the height of a seat cushion with respect to a vehicle body floor.

### Related Art

Japanese Patent Application Laid-Open (JP-A) No. 2007-261388 discloses a supporting structure of a vehicle seat that has a seat lifter for adjusting the vehicle body vertical direction height of a seat cushion with respect to the vehicle body floor. In this supporting structure, a damper is provided between the seat cushion and the vehicle body floor. As the seat cushion is displaced downward in the vehicle body vertical direction, this damper generates lowering resistance that is greater than the raising resistance that is generated accompanying the seat cushion being displaced upward in the vehicle body vertical direction.

There are known seat lifters of structures in which, when operational force (rotational force) is received to an input shaft, locking is released, and the rotational force is transmitted from the input shaft to an output shaft. In this type of seat lifter, when locking is released due to a lowering operation (the operation of rotating the input shaft in the direction in which the seat cushion falls), due to the weight of the seat itself and the weight of the person sitting thereon, there is the concern that the output shaft may rotate relative to the input shaft and the seat cushion will lower. Therefore, for example, a portion of the output shaft is made to abut a friction surface of a friction member that is fixed to the seat cushion, and frictional force is generated between the both. However, because the frictional force between the output shaft and the friction member is applied also at times of the raising operation of the seat lifter (the operation of rotating the input shaft in the direction in which the seat cushion rises), it is desirable to reduce the operational force at the time of the raising operation. Further, in the technique disclosed in JP-A No. 2007-261388, the above-described damper is provided, but because the frictional force that is generated at the seat lifter is applied both at times of the raising operation and at times of the lowering operation, there is room for improvement in reducing the operational force at the time of the raising operation.

US Patent Application Publication No. 2007/137965 A1, which, corresponds to the preamble of claim 1, discloses another supporting structure of a vehicle seat that has a seat lifter for adjusting the vehicle body vertical direction height of a seat cushion with respect to the vehicle body floor.

### SUMMARY

In view of the above-described circumstances, the present invention provides a seat lifter structure that can suppress relative rotation of an output shaft with respect to an input shaft due to the weights of a seat and a seated person at the time of the lowering operation of a seat cushion, and that can reduce the operational force at the time of the raising operation of the seat cushion.

A seat lifter structure according to the present invention as defined in claim 1 includes: an input shaft that is rotatably provided at a seat cushion of a seat that is set on a vehicle body floor, and that rotates around an axis when operational force is received from a seated person; an output shaft that is connected to the input shaft, and that, when the input shaft rotates, rotates in a same direction as the input shaft; a link mechanism that is provided between the vehicle body floor and the seat cushion, and is connected to the output shaft, when the output shaft rotates in a first direction, the link mechanism moving the seat cushion downward in a vehicle body vertical direction with respect to the vehicle body floor, and, when the output shaft rotates in a second direction that is opposite to the first direction, the link mechanism moving the seat cushion upward in the vehicle body vertical direction with respect to the vehicle body floor; and an abutting portion that is provided at the output shaft, and that, when the input shaft rotates in the first direction, abuts a friction surface that is provided at the seat cushion or the input shaft. When operational force is received from a seated person and the input shaft rotates around the axis in the first direction, the output shaft that is connected to the input shaft rotates in the same direction as the input shaft (the first direction). When the output shaft rotates in the first direction, due to the link mechanism, the seat cushion moves downward in the vehicle body vertical direction with respect to the vehicle body floor (in other words, the seat cushion is lowered).

Here, when the input shaft is rotated in the first direction in order to lower the seat cushion, the abutting portion of the output shaft abuts the friction surface that is provided at the seat cushion or the input shaft. Therefore, the relative rotation of the output shaft in the first direction with respect to the input shaft due to the weights of the seat and the seated person is suppressed by the frictional force that is generated between the abutting portion of the output shaft and the friction surface. Namely, at the time of the lowering operation of the seat cushion (at the time of the operation of rotating the input shaft in the first direction), the relative rotation of the output shaft with respect to the input shaft due to the weights of the seat and the seated person can be suppressed.

Further, in the above-described seat lifter structure, when operational force is received from the seated person and the input shaft rotates around the axis in the second direction, the output shaft that is connected to the input shaft rotates in the same direction as the input shaft (the second direction). When the output shaft rotates in the second direction, due to the link mechanism, the seat cushion moves upward in the vehicle body vertical direction with respect to the floor surface (in other words, the seat cushion is raised).

Here, even if the input shaft is rotated in the second direction in order to raise the seat cushion, the abutting portion of the output shaft does not abut the friction surface. Therefore, frictional force is not generated between the abutting portion and the friction surface, and the operational force at the time of the raising operation of the seat cushion (at the time of the operation of rotating the input shaft in the second direction) can be reduced. According to an embodiment In a seat lifter structure of a second aspect of the present invention, in the first aspect, the friction surface is an outer peripheral surface of a friction member that is annular and is fixed to the seat cushion, the abutting portion is structured by a moving member that is provided at the output shaft and moves in directions of approaching and moving away from the friction surface, and an outer peripheral surface of the moving member is pushed by a portion of the input shaft that rotates in the first direction, and approaches the friction surface. At the time of the lowering operation of the seat cushion, the moving member, that is pushed by a portion of the input shaft, approaches and abuts the outer peripheral surface of the friction member. Here, because the moving member rotates together with the output shaft, the moving member slides on the outer peripheral surface of the friction member while generating frictional force between itself and the outer peripheral surface of the friction member that is fixed to the seat cushion. Due thereto, at the time of the lowering operation of the seat cushion, frictional force is generated substantially continuously between the output shaft that rotates in the first direction and the friction member that is fixed to the seat cushion, and therefore, stable frictional force can be ensured. Accordingly, at the time of the lowering operation of the seat cushion, the relative rotation of the output shaft with respect to the input shaft due to the weights of the seat and the seated person can be suppressed more. According to a further embodiment of the present invention, in the second aspect, an inclined portion, that is inclined such that a height of the outer peripheral surface of the moving member becomes higher while heading in the first direction, is formed at the outer peripheral surface of the moving member, and an oppositely inclined portion, that is inclined in a direction opposite the inclined portion, is formed at a portion of the input shaft which portion contacts the inclined portion. At the time of the lowering operation of the seat cushion, the oppositely inclined portion of the input shaft contacts the inclined portion of the moving member, and some of the rotational force of the input shaft is converted into moving force that causes the moving member to approach the outer peripheral surface of the friction member. In this way, rotational force of the input shaft can be converted into moving force of the moving member by the simple structure of forming the inclined portion at the moving member and forming the oppositely inclined portion at the input shaft. According to a further embodiment of the present invention, in the second aspect or the third aspect, a plurality of the moving members are disposed at an outer peripheral side of the friction member at an interval in a peripheral direction of the friction member. The plural moving members are disposed at the outer peripheral side of the friction member at an interval in the peripheral direction of the friction member. Therefore, wear of the respective moving members can be suppressed while the frictional force that is generated between the output shaft and the friction member is ensured. According to a further embodiment of the present invention, in the first aspect, a through-hole, that passes-through in an axial direction of the input shaft and whose length direction is a rotating direction of the input shaft, is formed at the input shaft, and the friction surface is an outer peripheral surface of a friction member that is elastically deformable and is provided in a convex shape at a wall surface of a length direction intermediate portion of the through-hole, and the abutting portion is structured by a projecting portion that is cylindrical and projects-out in an axial direction of the output shaft and is inserted in the through-hole, and, when the input shaft rotates in the first direction, the projecting portion moves, with respect to the input shaft, to a second direction end portion side of the through-hole, and is nipped by the friction member and the second direction end portion of the through-hole. At the time of the lowering operation of the seat cushion, the projecting portion of the output shaft moves (moves relatively), with respect to the input shaft that rotates in the first direction, to the second direction end portion side of the through-hole, and is nipped by the second direction end portion of the through-hole and the friction member that is provided at the wall surface of the through-hole. In this nipped state, the output shaft rotates together with the input shaft in the first direction. Here, even if the output shaft attempts to rotate relative to the input shaft in the first direction due to the weights of the seat and the seated person, because the projecting portion is abutting the outer peripheral surface of the friction member that is elastically deformable, the movement of the output shaft relative to the input shaft in the first direction is suppressed by the frictional force that is generated between the projecting portion and the outer peripheral surface of the friction member. In this way, frictional force can be generated between the projecting portion and the outer peripheral surface of the friction member as described above, by the simple structure of providing the friction member at the wall surface of the through-hole that is provided in the input shaft, and providing the projecting portion at the output shaft. According to a further embodiment of the present invention, in the fifth aspect, the friction member is a plate spring whose length direction both ends are fixed to the wall surface of the length direction intermediate portion of the through-hole, and whose length direction intermediate portion is curved in a convex shape. A plate spring, whose length direction both ends are fixed to a wall surface of the through-hole and whose length direction intermediate portion is curved in a convex shape, is used as the friction member. Therefore, the relative rotation of the output shaft with respect to the input shaft in the first direction due to the weights of the seat and the seated person can be suppressed by a simple structure.

### BRIEF DESCRIPTION OF THE DRAWINGS

Exemplary embodiments of the present invention will be described in detail based on the following figures, wherein:
Fig. 1 is a side sectional view of a seat to which a seat lifter structure relating to a first embodiment of the present invention is applied;
Fig. 2 is an enlarged view of the portion indicated by arrow 2 in Fig. 1;
Fig. 3 is an exploded perspective view of a brake portion of a lifter device that is used in the seat lifter structure relating to the first embodiment;
Fig. 4 is a cross-sectional view in a direction orthogonal to the axial direction of the brake portion of Fig. 3;
Fig. 5 is a front view in which the brake portion of Fig. 3 is seen from the axial direction;
Fig. 6 is an enlarged view of the portion indicated by arrow 6 in Fig. 4;
Fig. 7 is an enlarged view that corresponds to Fig. 6 and shows the state of the brake portion at the time of the raising operation of a seat cushion;
Fig. 8 is an enlarged view that corresponds to Fig. 6 and shows the state of the brake portion at the time of the lowering operation of the seat cushion;
Fig. 9 is an exploded perspective view of a brake portion of a lifter device that is used in a seat lifter structure relating to a second embodiment;
Fig. 10 is a cross-sectional view in a direction orthogonal to the axial direction of the brake portion of Fig. 9;
Fig. 11 is a front view in which the brake portion of Fig. 9 is seen from the axial direction;
Fig. 12 is an enlarged view of the portion indicated by arrow 12 in Fig. 10;
Fig. 13 is an enlarged view that corresponds to Fig. 12 and shows the state of the brake portion at the time of the raising operation of the seat cushion; and
Fig. 14 is an enlarged view that corresponds to Fig. 12 and shows the state of the brake portion at the time of the lowering operation of the seat cushion.

### DETAILED DESCRIPTION

### <First Embodiment>

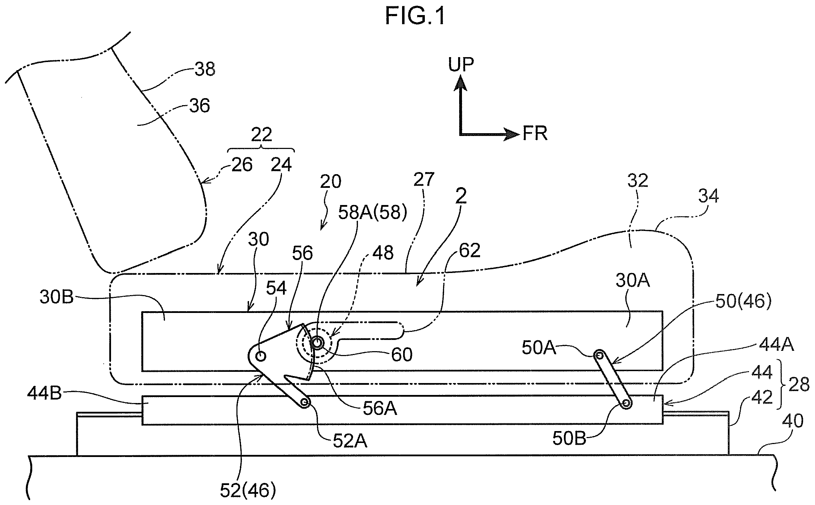

A seat lifter structure 20 relating to a first embodiment of the present invention, and a seat 22 for a vehicle (an automobile in the present embodiment) that is provided with the seat lifter structure 20, are described hereinafter on the basis of Fig. 1 through Fig. 8. Note that arrow FR in the drawings indicates the forward direction of the seat 22, arrow UP indicates the upward direction of the seat 22, and arrow W indicates the transverse direction of the seat 22. Further, the forward, upward and transverse directions of seat 22 correspond respectively to the forward, upward and transverse directions of the vehicle (the automobile) to which the seat 22 is applied. Hereinafter, when merely longitudinal direction, vertical direction and transverse directions are used, they mean the respective directions that are based on the seat 22 (the vehicle body of the automobile).

As shown in Fig. 1, the seat 22 has a seat cushion 24 on which a vehicle occupant (a seated person) sits, a seat back 26 for supporting the back of the vehicle occupant, and unillustrated reclining mechanism, a seat sliding mechanism 28, and the seat lifter structure 20.

The seat cushion 24 has a seat cushion frame 30 that is the skeleton. The seat cushion 24 is formed by a pad 32 being mounted to the seat cushion frame 30 and being covered from above by a skin 34.

The seat back 26 has an unillustrated seat back frame that is the skeleton. The seat back 26 is formed by a pad 36 being mounted to the seat back frame and being covered from above by a skin 38.

The reclining mechanism is provided between the seat cushion 24 and the seat back 26, and connects the seat back frame and the rear end portion of the seat cushion frame 30. This reclining mechanism is a conventional, well-known mechanism, and makes it possible to adjust the angle of tilting of the seat back 26 with respect to the seat cushion 24 in several stages.

The seat sliding mechanism 28 is provided beneath the seat cushion 24, and supports the seat cushion 24 via a link mechanism 46 that is described later. This seat sliding mechanism 28 has lower rails 42 that are fixed to a vehicle body floor 40, upper rails 44 that are supported (guided) so as to be able to slide in the seat longitudinal direction with respect to the lower rails 42, and an unillustrated locking mechanism that locks the sliding of the upper rails 44 with respect to the lower rails 42. The seat sliding mechanism 28 makes it possible to adjust the position of the seat cushion 24 and the seat back 26 with respect to the vehicle body floor 40 in the seat longitudinal direction.

The seat lifter structure 20 has the link mechanism 46 that makes it possible to move the seat cushion 24 in the vertical direction with respect to the vehicle body floor 40, and a lifter device 48 that transmits operational force (rotational force), by which the vehicle occupant operates an operation lever 62 that is described later, to the link mechanism 46.

The link mechanism 46 has front side link members 50 and rear side link members 52 that connect the seat cushion frame 30 and the upper rails 44.

The upper end of the front side link member 50 is connected by a link shaft (link pin) 50A to a front portion 30A of the seat cushion frame 30 so as to be able to rotate around the link shaft 50A. On the other hand, the lower end of the front side link member 50 is connected by a link shaft 50B to a front portion 44A of the upper rail 44 so as to be able to rotate around the link shaft 50B.

The upper end of the rear side link member 52 is connected by a lifter rod 54 to a rear portion 30B of the seat cushion frame 30 so as to be able to rotate around the lifter rod 54. On the other hand, the lower end of the rear side link member 52 is connected by a link shaft 52A to a rear portion 44B of the upper rail 44 so as to be able to rotate around the link shaft 52A. The lifter rod 54 connects the pair of rear side link members 52, that are provided at the seat transverse direction both sides, so as to synchronize the operations of the pair of rear side link members 52.

By the upper rail 44, the front side link member 50, the seat cushion frame 30 and the rear side link member 52, the link mechanism 46 structures a 4-joint link in which the upper rail 44 is made to be a fixed link. The range between a posture in which the front side link member 50 and the rear side link member 52 are tilted rearward at a predetermined angle, and a posture in which the front side link member 50 and the rear side link member 52 are substantially upright, is the range of operation of the link mechanism 46. The link mechanism 46 makes it possible to move the seat cushion 24 in the vertical direction with respect to the vehicle body floor 40, by operation (swinging) of the front side link member 50 and the rear side link member 52. Namely, the link mechanism 46 makes it possible to adjust the vertical direction position (the height) of the seat cushion 24.

A lifter gear 56 is provided integrally with the rear side link member 52. The lifter gear 56 is formed substantially in the shape of a fan-shaped plate at which an outer tooth 56A is formed along a circular arc around the lifter rod 54. The lifter gear 56 extends forward from the upper portion of the rear side link member 52, such that the outer tooth 56A is positioned at the front side with respect to the lifter rod 54. Further, the outer tooth 56A of the lifter gear 56 meshes-together with a pinion gear 60 that is provided at an output shaft 58 of the lifter device 48. Therefore, when the output shaft 58 rotates, the rotational force of the output shaft 58 is transmitted from the pinion gear 60 via the lifter gear 56 to the rear side link member 52.

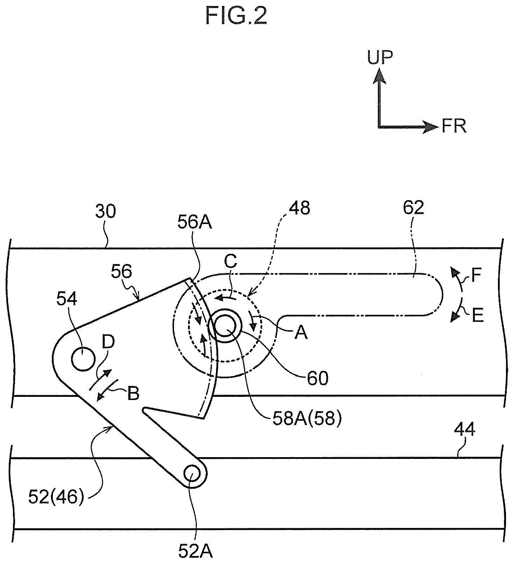

As shown in Fig. 2, when the output shaft 58 rotates in a first direction (the arrow A direction in Fig. 2) around the axis, the rear side link member 52 tilts rearward (rotates in the arrow B direction in Fig. 2), and, accompanying this, the front side link member 50 also tilts rearward, and the seat cushion 24 moves downward (falls). On the other hand, when the output shaft 58 rotates in a second direction (the arrow C direction in Fig. 2), the rear side link member 52 stands-up (rotates in the arrow D direction in Fig. 2), and, accompanying this, the front side link member 50 also stands-up, and the seat cushion 24 moves upward (rises).

The lifter device 48 is mounted to a seat transverse direction side surface of the seat cushion 24 (the seat cushion frame 30). This lifter device 48 is structured by an unillustrated force converting section that converts the swinging operation of the operation lever 62 that the vehicle occupant operates (the swinging operation in the arrow E direction and the arrow F direction in Fig. 2) into rotational force, and a brake portion 64 that transmits to the link mechanism 46 the rotational force obtained by conversion at the force converting section, and cuts-off reverse input from the link mechanism 46 (rotational force in the opposite direction).

The force converting section of the lifter device 48 is a structure that converts operation, at the time when the operation lever 62 is pushed-down (swinging operation in the arrow E direction in Fig. 2) from a neutral position (the position of the state shown in Fig. 1 or Fig. 2) or pulled-up (swinging operation in the arrow F direction in Fig. 2) from the neutral position, into rotational force, and does not convert operation, at the time when the operation lever 62 returns to the neutral position, into rotational force. Note that, due to the operation of pushing the operation lever 62 down from the neutral position, the output shaft 58, together with an input shaft 66 that is described later, rotates in the first direction. Due to the operation of pulling the operation lever 62 up from the neutral position, the output shaft 58, together with the input shaft 66 that is described later, rotates in the second direction.

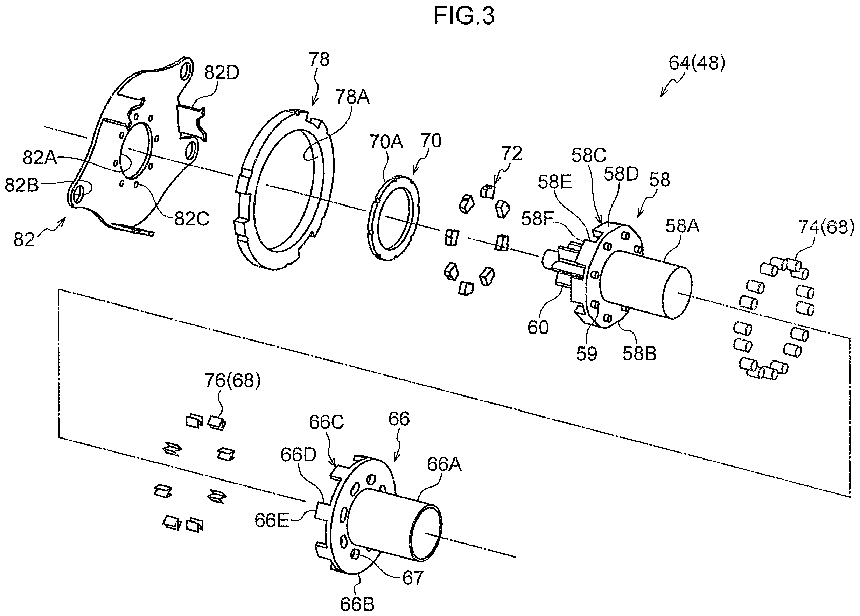

As shown in Fig. 3 through Fig. 5, the brake portion 64 has: the input shaft 66 to which is received the rotational force obtained by conversion at the force converting section; the output shaft 58 that is connected to the input shaft 66, and rotates in the same direction as the direction in which the input shaft 66 rotates, and that transmits rotational force to the link mechanism 46; a locking mechanism 68 that permits the transmission of rotational force from the input shaft 66 to the output shaft 58 and cuts-off reverse input from the output shaft 58 to the input shaft; a friction ring 70 that serves as an example of a friction member and is fixed to the seat cushion frame 30; and sliders 72 that are provided at the output shaft 58 and structure abutting portions 72A that, when the input shaft 66 rotates in the first direction, abut an outer peripheral surface 70A that serves as a friction surface of the friction ring 70. Further, as shown in Fig. 3, in the present embodiment, the axis of the input shaft 66 and the axis of the output shaft 58 coincide, i.e., the input shaft 66 and the output shaft 58 are disposed on the same axis.

As shown in Fig. 3, the input shaft 66 has: a tubular portion 66A in which a shaft portion 58A of the output shaft 58 is inserted; an overhanging portion 66B that is annular and juts-out toward the radial direction outer side from an axial direction one end portion (in Fig. 3, the end portion at a fixed plate 82 side that is described later) of the tubular portion 66A; and an enlarged diameter portion 66C that extends from the outer peripheral edge portion of the overhanging portion 66B toward an axial direction one side (in Fig. 3, the fixed plate 82 side that is described later).

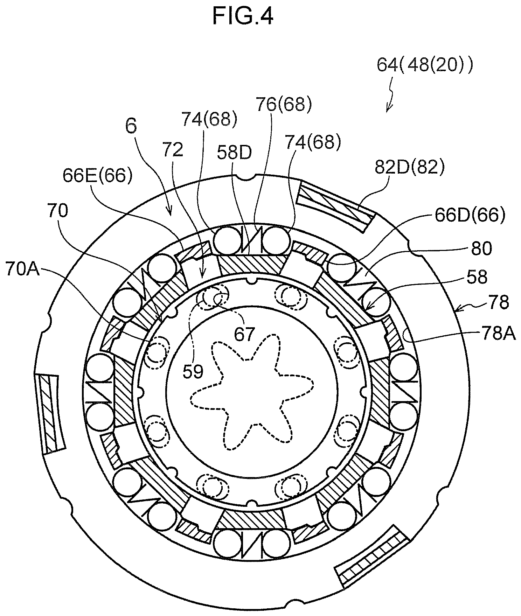

Plural (eight in the present embodiment) notches, that are concave from the one end portion in the axial direction toward the other end portion side, are formed at the enlarged diameter portion 66C at an interval (in the present embodiment, a uniform interval) in the peripheral direction. These notched portions are made to be pocket portions 66D (see Fig. 4) that hold tubular rollers 74 and plate springs 76 that are described later and that structure the locking mechanism 68. Note that, in the present embodiment, the pocket portions 66D are formed by notching the enlarged diameter portion 66C from the axial direction one end portion all the way to the overhanging portion 66B. However, the present invention is not limited to this structure, and, provided that the pocket portions 66D can accommodate and hold the tubular rollers 74 and the plate springs 76, the pocket portions 66D may be formed by notching the enlarged diameter portion 66C from the axial direction one end portion until just before reaching the overhanging portion 66B. Further, there may be a structure in which, without notching the enlarged diameter portion 66C, opening portions are formed at an interval in the peripheral direction in the enlarged diameter portion 66C, and the tubular rollers 74 and the plate springs 76 are accommodated and held in these opening portions.

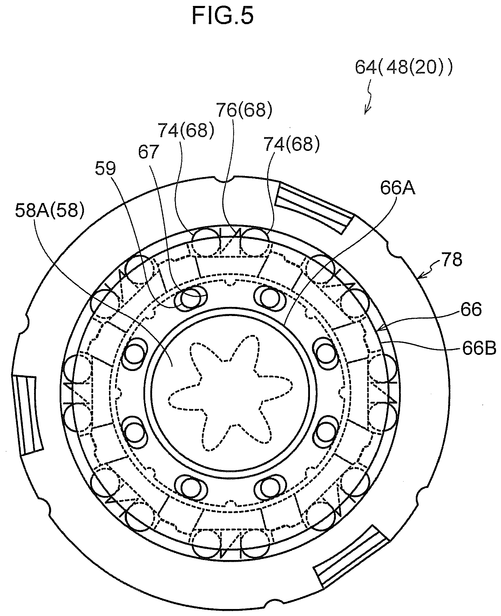

Through-holes 67, that pass through the overhanging portion 66B in the axial direction, are formed at the overhanging portion 66B at the periphery of the tubular portion 66A at an interval (in the present embodiment, a uniform interval) in the peripheral direction. These through-holes 67 are long holes whose lengths along the peripheral direction of the input shaft 66 are the length directions thereof, and projecting portions 59 of the output shaft 58 that are described later are inserted therein (see Fig. 5).

The output shaft 58 has: the shaft portion 58A; an overhanging portion 58B that is annular and that juts-out toward the radial direction outer side from an axial direction intermediate portion of the shaft portion 58A; and an enlarged diameter portion 58C that extends from the outer peripheral edge portion of the overhanging portion 58B toward an axial direction one side (in Fig. 3, the fixed plate 82 side), and that is inserted into the radial direction inner side of the enlarged diameter portion 66C of the input shaft 66.

The pinion gear 60 is formed at the axial direction one end portion (in Fig. 3, the end portion at the fixed plate 82 side) of the shaft portion 58A. The axial direction other end portion of the shaft portion 58A is inserted in the tubular portion 66A.

The outer peripheral surface of the enlarged diameter portion 58C is structured by plural (e.g., eight) cam surfaces 58D (see Fig. 4) that are flat and are formed at a uniform interval in the peripheral direction. Between these cam surfaces 58D and an inner peripheral surface 78A of an outer ring 78 that is described later, there are formed gaps 80 (see Fig. 4) that are shaped such that the lengths thereof from the cam surfaces 58D to the inner peripheral surface 78A become longer from the both ends of the cam surfaces 58D toward the centers. Two of the tubular rollers 74 and one of the plate springs 76 are disposed in each of the gaps 80.

Further, plural (eight in the present embodiment) notches, that are concave from the axial direction one end portion toward the other end portion side, are formed at the enlarged diameter portion 58C at an interval (in the present embodiment, a uniform interval) in the peripheral direction, at the boundary portions between the cam surfaces 58D that are adjacent one another. These notched portions are pocket portions 58E that are for accommodating and holding the sliders 72 (see Fig. 4). Note that, in the present embodiment, the pocket portions 58E are formed by notching the enlarged diameter portion 58C from the axial direction one end portion all the way to the overhanging portion 58B. However, the present invention is not limited to this structure, and, provided that the pocket portions 58E can accommodate and hold the sliders 72, the pocket portions 58E may be formed by notching the enlarged diameter portion 58C from the axial direction one end portion until just before reaching the overhanging portion 58B. Further, there may be a structure in which, without notching the enlarged diameter portion 58C, opening portions are formed at an interval in the peripheral direction in the enlarged diameter portion 58C, and the sliders 72 are accommodated and held in these opening portions.

The projecting portions 59, that project-out in the axial direction from the overhanging portion 58B, are formed at the overhanging portion 58B at the periphery of the shaft portion 58A at an interval (in the present embodiment, a uniform interval) in the peripheral direction. The projecting portions 59 are inserted in the through-holes 67 of the input shaft 66, and the input shaft 66 and the output shaft 58 are connected. Note that, as shown in Fig. 4 and Fig. 5, in the state in which rotational force is not being imparted to the input shaft 66 (an unloaded state), plate-shaped portions 66E that structure the enlarged diameter portion 66C of the input shaft 66 are disposed at the radial direction outer sides of the pocket portions 58E of the output shaft 58.

As shown in Fig. 3, the brake member 64 has the fixing plate 82 that fixes the lifter device 48 to the side surface of the seat cushion frame 30, and the outer ring 78 that is annular and is fixed to the fixing plate 82. Because the fixing plate 82 and the outer ring 78 are fixed to the seat cushion frame 30, the fixing plate 82 and the outer ring 78 are in static states (non-rotating states) with respect to the input shaft 66 and the output shaft 58 that rotate with respect to the seat cushion frame 30 (the seat cushion 24). Further, the friction ring 70 also is fixed to the fixing plate 82, and is in a static state with respect to the input shaft 66 and the output shaft 58.

A through-hole 82A, through which the shaft portion 58A of the output shaft 58 passes, is formed at the central portion of the fixing plate 82. Further, plural (three in the present embodiment) mounting holes 82B are formed at intervals in the outer peripheral edge portion of the fixing plate 82. Unillustrated bolts are passed-through the mounting holes 82B, and the fixing plate 82 is fixed to the side surface of the seat cushion frame 30. Further, plural through-holes 82C are formed at the periphery of the through-hole 82A of the fixing plate 82 at an interval (in the present embodiment, a uniform interval) around the through-hole 82A. Unillustrated projecting portions, that are formed at the side surface of the friction ring 70 (the side surface at the fixing plate 82 side), are inserted (press-fit) into these through-holes 82C. The projecting portions are inserted into the through-holes 82C, and the friction ring 70 is fixed to the fixing plate 82.

Plural (three in the present embodiment) notched portions 78B that are concave are formed at the outer peripheral edge portion of the outer ring 78. Claw portions 82D, that are formed at the outer peripheral edge portion of the fixing plate 82, are fit into these notched portions 78B, and the outer ring 78 is fixed to the fixing plate 82. Note that, in the present embodiment, the enlarged diameter portion 66C of the input shaft 66, the enlarged diameter portion 58C of the output shaft 58, the friction ring 70, the tubular rollers 74 and the plate springs 76 are disposed at the radial direction inner side of the outer ring 78.

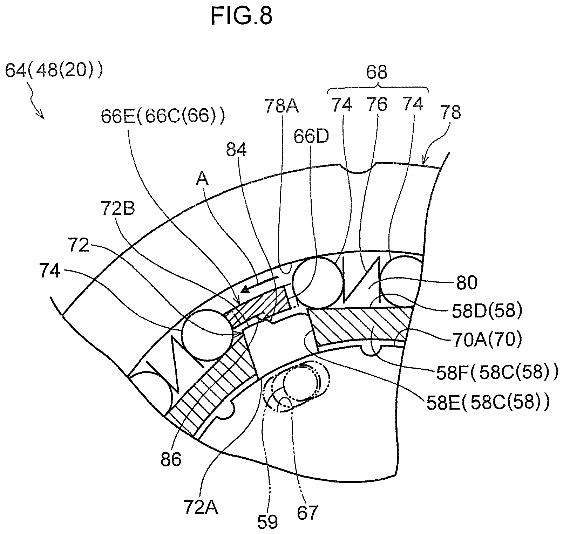

The friction ring 70 is annular, and is disposed at the radial direction inner side of the enlarged diameter portion 58C of the output shaft 58, and is fixed to the fixing plate 82 (see Fig. 3 and Fig. 4). As shown in Fig. 8, due to the abutting portions 72A that are the distal end portions of the sliders 72 abutting the outer peripheral surface 70A of the friction ring 70, the friction ring 70 generates frictional force between the outer peripheral surface 70A and the abutting portions 72A, and can impart rotational resistance to the output shaft 58.

The locking mechanism 68 has the pairs of tubular rollers 74 that are disposed in the gaps 80, and the plate springs 76 that are disposed between the pairs of tubular rollers 74 and apply separating force to the both tubular rollers 74. Note that N-shaped plate springs are used as the plate springs 76 in the present embodiment. However, the shape of the plate springs is not limited, provided that the plate spring can, between the pair of tubular rollers 74, impart separating force to the both tubular rollers 74. For example, plate springs that are M-shaped may be used.

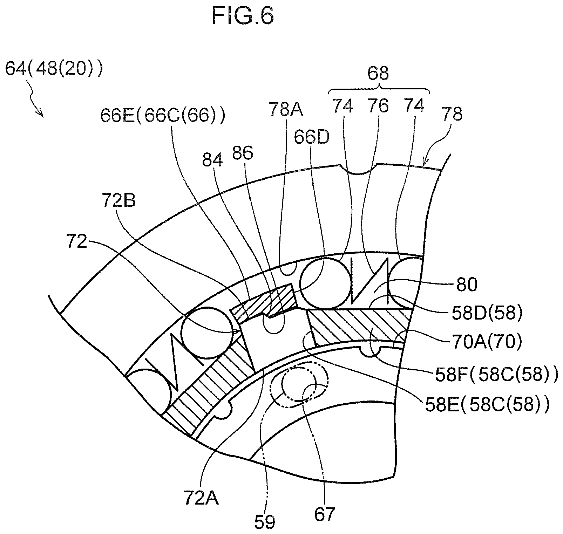

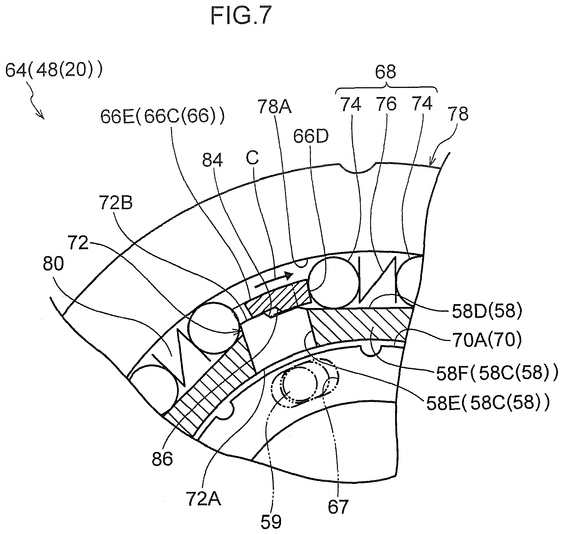

As shown in Fig. 6, in the state in which rotational force is not imparted to the input shaft 66, due to the separating force of the plate spring 76, the two tubular rollers 74 respectively abut the inner peripheral surface 78A of the outer ring 78 and end portion sides of the cam surface 58D of the output shaft 58, that form the gap 80, and rotation of the output shaft 58 is locked. In this state, the transmission of reverse input from the output shaft 58 to the input shaft 66 is cut-off. On the other hand, as shown in Fig. 7 and Fig. 8, when rotational force is imparted (transmitted) to the input shaft 66, one tubular roller 74 among the two tubular rollers 74 is pushed by the plate-shaped portion 66E that structures the enlarged diameter portion 66C, and approaches the other tubular roller 74 while elastically deforming the plate spring 76. At this time, because the one tubular roller 74 moves on the cam surface 58D, as the one tubular roller 74 approaches the other tubular roller 74, the one tubular roller 74 moves away from the inner peripheral surface 78A of the outer ring 78, and locking of the output shaft 58 is released. Further, a length direction end portion of the through-hole 67 of the input shaft 66 and the projecting portion 59 of the output shaft 58 abut one another, and rotational force is transmitted from the input shaft 66 to the output shaft 58.

The sliders 72 are accommodated and held in the pocket portions 58E of the output shaft 58, and can move in directions of approaching and moving away from the outer peripheral surface 70A of the friction ring 70. Concretely, the sliders 72 can move in the radial direction of the output shaft 58. Further, because the sliders 72 are accommodated and held in the pocket portions 58E, the plural sliders 72 are disposed at the outer peripheral side of the friction ring 70 at an interval in the peripheral direction of the friction ring 70.

Further, when the slider 72 is pushed by the plate-shaped portion 66E of the input shaft 66 that rotates in the first direction, the slider 72 approaches the outer peripheral surface 70A of the friction ring 70, and the abutting portion 72A abuts the outer peripheral surface 70A. Concretely, as shown in Fig. 6 through Fig. 8, an inclined portion 84, that is inclined such that the height of an outer peripheral surface 72B becomes higher while heading toward the first direction, is formed at the outer peripheral surface 72B of the slider 72. On the other hand, an oppositely inclined portion 86, that is inclined in the direction opposite the inclined portion 84, is formed at the inner peripheral surface of the plate-shaped portion 66E of the input shaft 66. Note that "the outer peripheral surface 72B of the slider 72 becomes higher" here means that the distance from the axis of the output shaft 58 becomes longer.

Operation and effects of the seat lifter structure 20 of the present embodiment are described next.

At the seat lifter structure 20, when operational force is received from a seated person via the operation lever 62 and the input shaft 66 rotates in the first direction around the axis, as shown in Fig. 8, one of the tubular rollers 74 (the tubular roller 74 at the first direction side of the plate-shaped portion 66E in Fig. 8) of the two tubular rollers 74 that are disposed within the gap 80 is pushed by the plate-shaped portion 66E of the input shaft 66, and the locked state is released. At this time, the slider 72 is pushed by the plate-shaped portion 66E and approaches the friction ring 70, and the abutting portion 72A that is the distal end portion abuts the outer peripheral surface 70A. Further, the output shaft 58 rotates in the first direction together with the input shaft 66, in a state in which frictional force is generated between the abutting portion 72A and the outer peripheral surface 70A. When the output shaft 58 rotates in the first direction, rotational force is transmitted from the pinion gear 60 via the outer tooth 56A of the lifter gear 56 to the link mechanism 46 (the rear side link member 52), and the seat cushion 24 is lowered with respect to the vehicle body floor 40.

Here, when the input shaft 66 is rotated in the first direction in order to lower the seat cushion 24, because the abutting portions 72A of the sliders 72 abut the outer peripheral surface 70A of the friction ring 70, relative rotation in the first direction of the output shaft 58 with respect to the input shaft 66 due to the weights of the seated person and the seat (here, the seat main body that is structured by the seat cushion 24 and the seat back 26) is suppressed by the frictional force that arises between the abutting portions 72A and the outer peripheral surface 70A. Namely, at the time of the lowering operation of the seat cushion 24 (at the time of the operation of rotating the input shaft 66 in the first direction), relative rotation of the output shaft 58 with respect to the input shaft 66 due to the weights of the seat and the seated person can be suppressed.

Further, in the above-described seat lifter structure, when operational force is received from a seated person via the operation lever 62 and the input shaft 66 rotates in the second direction around the axis, as shown in Fig. 7, the other tubular roller 74 (the tubular roller 74 at the second direction side of the plate-shaped portion 66E in Fig. 7) of the two tubular rollers 74 that are disposed within the gap 80 is pushed by the plate-shaped portion 66E of the input shaft 66, and the locked state is released, and the output shaft 58 rotates together with the input shaft 66. When the output shaft 58 rotates in the second direction, rotational force is transmitted from the pinion gear 60 via the outer tooth 56A of the lifter gear 56 to the link mechanism 46 (the rear side link member 52), and the seat cushion 24 is raised with respect to the vehicle body floor 40.

Here, even if the input shaft 66 is rotated in the second direction in order to raise the seat cushion 24, the abutting portions 72A of the sliders 72 do not abut the outer peripheral surface 70A of the friction ring 70, or are not pushed by the plate-shaped portions 66E of the input shaft 66. Therefore, frictional force is not generated between the abutting portions 72A and the outer peripheral surface 70A, and the operational force at the time of the raising operation of the seat cushion 24 (at the time of the operation of rotating the input shaft 66 in the second direction) can be reduced.

Further, at the seat lifter structure 20, at the time of the lowering operation of the seat cushion 24, frictional force is generated substantially continuously between the output shaft 58 that rotates in the first direction and the friction ring 70 that is fixed to the seat cushion 24. Therefore, stable frictional force can be ensured. Accordingly, at the time of the lowering operation of the seat cushion 24, relative rotation of the output shaft 58 with respect to the input shaft 66 due to the weights of the seat and the seated person can be suppressed more.

Moreover, in the seat lifter structure 20, at the time of the lowering operation of the seat cushion 24, the oppositely inclined portions 86 of the plate-shaped portions 66E of the input shaft 66 contact the inclined portions 84 of the sliders 72, and some of the rotational force of the input shaft 66 is converted into moving force that causes the sliders 72 to approach the outer peripheral surface 70A of the friction ring 70. In this way, the rotational force of the input shaft 66 can be converted into moving force of the sliders 72 by the simple structure for forming the inclined portions 84 at the sliders 72 and forming the oppositely inclined portions 86 at the plate-shaped portions 66E of the input shaft 66.

Still further, in the seat lifter structure 20, the plural sliders 72 are disposed at the outer peripheral side of the friction ring 70 at an interval in the peripheral direction of the friction ring 70. Therefore, wear of the respective sliders 72 can be reduced while the frictional force that is generated between the output shaft 58 and the friction ring 70 is ensured.

In the first embodiment, the plural pocket portions 58E are formed at the output shaft 58. However, the present invention is not limited to this structure, and there may be a structure in which one of the pocket portions 58E is formed at the output shaft 58, and, at the time of the lowering operation of the seat cushion 24, frictional force is generated between the friction ring 70 and the slider 72 that is accommodated and held in this pocket portion 58E.

### <Second Embodiment>

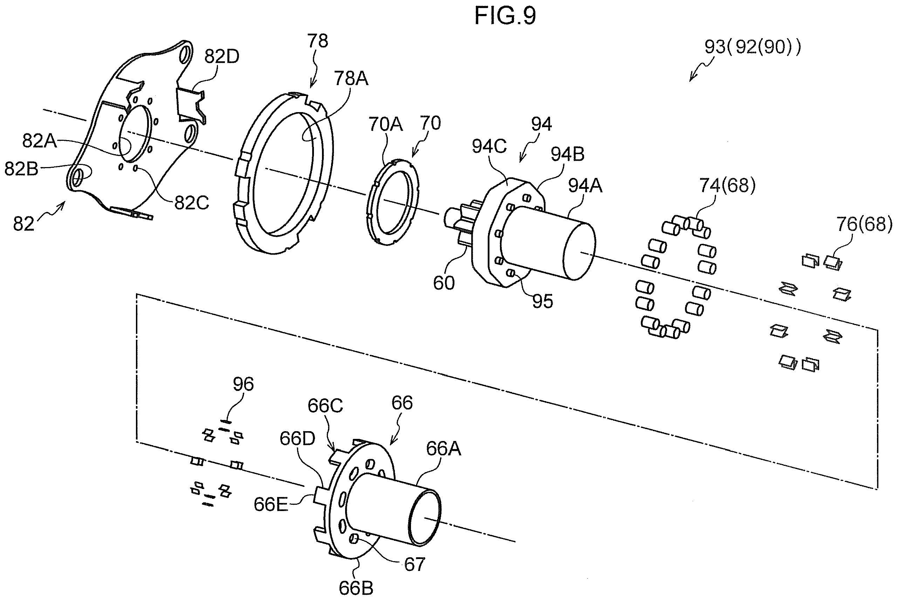

A seat lifter structure 90 relating to a second embodiment of the present invention is described next with reference to Fig. 9 through Fig. 14. Note that structures that are similar to those of the first embodiment are denoted by the same reference numerals, and description thereof is omitted as appropriate.

As shown in Fig. 9, in the seat lifter structure 90 of the present embodiment, structures other than a brake portion 93 of a lifter device 92 are similar to those of the seat lifter structure 20 of the first embodiment.

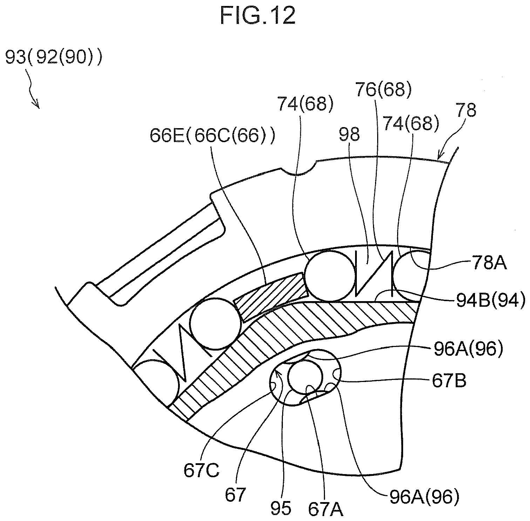

The brake portion 93 has the input shaft 66, an output shaft 94, the locking mechanism 68, the friction ring 70, the outer ring 78, the fixing plate 82, and plate springs 96 that serve as friction members and that are fixed to the wall surfaces of the through-holes 67 of the input shaft 66. Note that this is a structure in which the inclined portions 84 of the first embodiment are not formed at the plate-shaped portions 66E of the input shaft 66 of the present embodiment (refer to Fig. 12).

The output shaft 94 has a shaft portion 94A and an overhanging portion 94B that juts-out toward the radial direction outer side from an axial direction intermediate portion of the shaft portion 94A.

The pinion gear 60 is formed at one end portion (in Fig. 9, the end portion at the fixed plate 82 side) in the axial direction of the shaft portion 94A. The axial direction other end portion of the shaft portion 94A is inserted in the tubular portion 66A.

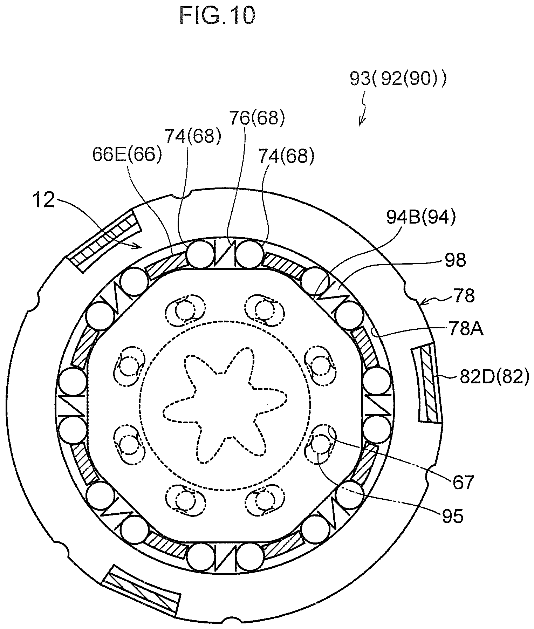

The outer peripheral surface of the overhanging portion 94B is structured by plural (e.g., eight) cam surfaces 94C (see Fig. 10) that are flat and that are formed at a uniform interval in the peripheral direction. Gaps 98 (see Fig. 10), that are shaped such that the lengths thereof from the cam surfaces 94C to the inner peripheral surface 78A become longer from the both ends of the cam surfaces 94C toward the centers, are formed between these cam surfaces 94C and the inner peripheral surface 78A of the outer ring 78. Two of the tubular rollers 74 and one of the plate springs 76 are disposed in each of the gaps 98.

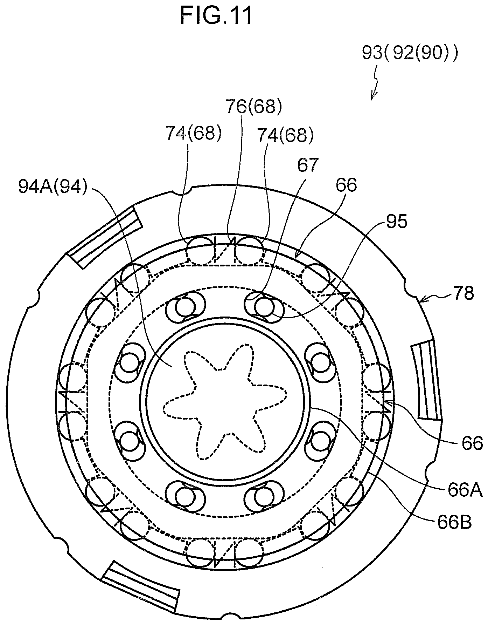

Further, projecting portions 95, that project-out in the axial direction from the overhanging portion 94B, are formed at the overhanging portion 94B at the periphery of the shaft portion 94A at an interval (in the present embodiment, a uniform interval) in the peripheral direction. These projecting portions 95 are inserted into the through-holes 67 of the input shaft 66, and the input shaft 66 and the output shaft 58 are connected. Note that, as shown in Fig. 10 and Fig. 11, in the state in which rotational force is not being imparted to the input shaft 66 (an unloaded state), the plate-shaped portions 66E of the input shaft 66 are disposed at the radial direction outer sides of the boundary portions of the adjacent cam surfaces 94C of the output shaft 94 (see Fig. 12).

As shown in Fig. 12, the plate springs 96 are provided in convex shapes at wall surfaces 67A of a length direction intermediate portion of the through-hole 67. Concretely, the length direction both ends of the plate springs 96 are fixed to the wall surfaces 67A, and the length direction intermediate portions are curved in convex shapes in directions of moving away from the wall surfaces 67A. Further, in the present embodiment, the plate springs 96 are provided respectively at facing portions of the through-hole 67, and the interval between the both is smaller than the outer diameter of the projecting portion 95. Therefore, in the present embodiment, when the input shaft 66 rotates in the first direction, the projecting portion 95 moves, with respect to the input shaft 66, to a second direction end portion 67B side of the through-hole 67, and is nipped by the end portion 67B of the through-hole 67 and the plate springs 96. Note that, in the present embodiment, there is a structure in which two of the plate springs 96 are provided at the one through-hole 67. However, the present invention is not limited to this structure, and may be a structure in which one of the plate springs 96 is provided in one of the through-holes 67. In a case in which one plate spring 96 is provided in one through-hole 67, by making the interval between an outer peripheral surface 96A of the plate spring 96 and the facing wall surface 67A be smaller than the outer diameter of the projecting portion 95, in the same way as a case in which two of the plate springs 96 are provided, when the input shaft 66 rotates in the first direction, the projecting portion 95 moves, with respect to the input shaft 66, to the second direction end portion 67B side of the through-hole 67, and the projecting portion 95 is nipped by the end portion 67B of the through-hole 67 and the plate spring 96.

Operation and effects of the seat lifter structure 90 of the present embodiment are described next.

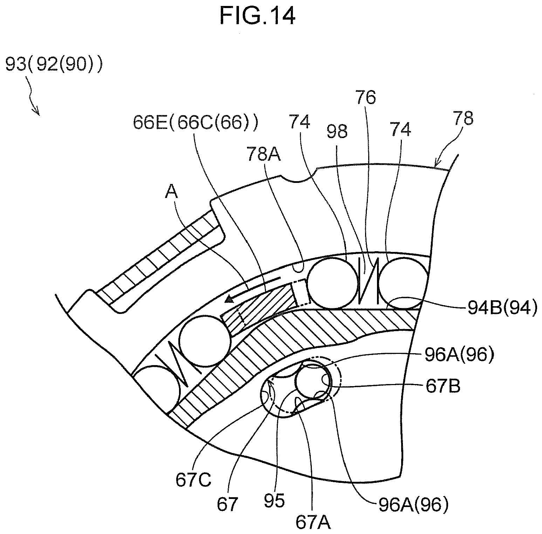

In the seat lifter structure 90, as shown in Fig. 14, at the time of the lowering operation of the seat cushion 24, in the state in which the projecting portion 95 of the output shaft 94 has moved (moved relatively) toward the end portion 67B side of the through-hole 67 with respect to the input shaft 66 and is nipped by the end portion 67B of the through-hole 67 and the plate springs 96, the output shaft 94 rotates in the first direction together with the input shaft 66. Here, even if the output shaft 94 attempts to rotate in the first direction relative to the input shaft 66 due to the weights of the seat and the seated person, because an abutting portion 95A that is the outer peripheral surface of the projecting portion 95 is abutting the outer peripheral surfaces 96A of the plate springs 96 that are elastically deformable, relative rotation of the output shaft 94 in the first direction with respect to the input shaft 66 is suppressed by the frictional force that is generated between the abutting portion 95A of the projecting portion 95 and the outer peripheral surfaces 96A. In this way, frictional force can be generated between the projecting portions 95 and the outer peripheral surfaces 96A of the plate springs 96 as described above, by the simple structure of providing the plate springs 96 at the wall surfaces 67A of the through-holes 67 of the input shaft 66 and providing the projecting portions 95 at the output shaft 94.

Note that an unillustrated spring for returning the operation lever 62 to its original position is provided at the lifter device 92. Therefore, in the state in which the operation lever 62 is not operated, the projecting portions 95 return to the length direction central portions of the through-holes 67 due to the elastic force of the spring that returns the operation lever 62 to its original position.

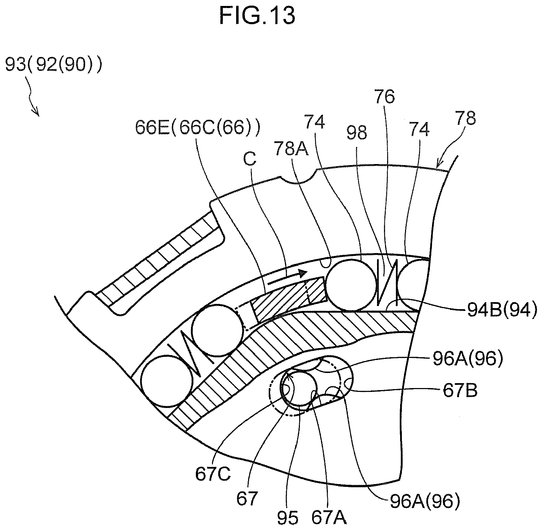

Further, at the time of the raising operation of the seat cushion 24, the projecting portions 95 of the output shaft 94 move, with respect to the input shaft 66, to end portion 67C sides of the through-holes 67 (see Fig. 13). Further, rotational force is transmitted from the input shaft 66 to the output shaft 94 via the projecting portions 95 that abut the end portions 67C of the through-holes 67.

Further, the seat lifter structure 90 uses, as the friction member, the plate spring 96 whose length direction both ends are fixed to the wall surface 67A of the through-hole 67 and whose length direction intermediate portion is curved in a convex shape. Therefore, the output shaft 58 rotating in the first direction relative to the input shaft 66 due to the weights of the seat and the seated person can be suppressed by a simple structure.

Moreover, in the seat lifter structure 90, the plate springs 96 are respectively provided at facing portions of the wall surfaces 67A of the through-hole 67, and moreover, the interval between the facing plate springs 96 is made to be smaller than the outer diameter of the projecting portion 95. Therefore, at the time of the lowering operation of the seat cushion 24, the frictional force that is generated due to the projecting portion 95 abutting the outer peripheral surfaces 96A of the plate springs 96 increased.

In the second embodiment, the plate spring 96, that is provided at the wall surface 67A of the through-hole 67 and that is curved in a convex shape, is made to be the friction member of the present invention, but the present invention is not limited to this structure. For example, a projecting member that projects-out freely from the wall surface 67A may be used as the friction member of the present invention. Concretely, at the time of the lowering operation of the seat cushion 24, the projecting portion 95 can be nipped by the end portion 67B of the through-hole 67 and the plate spring 96 by inserting and placing an urging member (e.g., a coil spring) and a projecting member, whose outer peripheral surface is curved in a circular arc shape, within a concave portion that is formed at the wall surface 67A, and causing the outer peripheral surface of the projecting member to project-out from the wall surface 67A due to the urging force of the urging member. Note that, at the time when the projecting portion 95 returns to the length direction central portion of the through-hole 67 due to the elastic force of the spring that returns the operation lever 62 to its original position, the aforementioned projecting member is pushed by the projecting portion 95 into the concave portion, and the projecting portion 95 passes thereon.

Although embodiments of the present invention have been described above, the present invention is not limited to the above description, and, of course, can be embodied by being modified in various ways other than the above within the scope of the claims.

## Claims

1. A seat lifter structure (20) comprising:
an input shaft (66) that is rotatably provided at a seat cushion (24) of a seat (22) that is set on a vehicle body floor (40), and that rotates around an axis when operational force is received from a seated person;
an output shaft (58) that is connected to the input shaft (66), and that, when the input shaft (66) rotates, rotates in a same direction as the input shaft (66); and
a link mechanism (46) that is provided between the vehicle body floor (40) and the seat cushion (24), and is connected to the output shaft (58), when the output shaft (58) rotates in a first direction, the link mechanism (46) moving the seat cushion (24) downward in a vehicle body vertical direction with respect to the vehicle body floor (40), and when the output shaft (58) rotates in a second direction that is opposite to the first direction, the link mechanism (46) moving the seat cushion (24) upward in the vehicle body vertical direction with respect to the vehicle body floor (40); and
the seat lifter structure (20) being **characterized in that** it further comprises:
an abutting portion (72A) that is provided at the output shaft (58), and that, when the input shaft (66) rotates in the first direction, abuts a friction surface that is provided at the seat cushion (24) or the input shaft (66).

2. The seat lifter structure (20) of claim 1, wherein
the friction surface is an outer peripheral surface (70A) of a friction member (70) that is annular and is fixed to the seat cushion (24),
the abutting portion (72A) is structured by a moving member (72) that is provided at the output shaft (58) and moves in directions of approaching and moving away from the friction surface, and
an outer peripheral surface (72B) of the moving member (72) is pushed by a portion of the input shaft (66) that rotates in the first direction, and approaches the friction surface.

3. The seat lifter structure (20) of claim 2, wherein
an inclined portion (84), that is inclined such that a height of the outer peripheral surface (72B) of the moving member (72) becomes higher while heading in the first direction, is formed at the outer peripheral surface (72B) of the moving member (72), and
an oppositely inclined portion (86), that is inclined in a direction opposite the inclined portion (84), is formed at a portion of the input shaft (66) which portion contacts the inclined portion.

4. The seat lifter structure (20) of claim 2 or claim 3, wherein a plurality of the moving members (72) are disposed at an outer peripheral side of the friction member (70) at an interval in a peripheral direction of the friction member (70).

5. The seat lifter structure (20) of claim 1, wherein
a through-hole (67), that passes-through in an axial direction of the input shaft (66) and whose length direction is a rotating direction of the input shaft, is formed at the input shaft (66),
the friction surface is an outer peripheral surface of a friction member that is elastically deformable and is provided in a convex shape at a wall surface of a length direction intermediate portion of the through-hole (67),
the abutting portion is structured by a projecting portion (95) that is cylindrical and projects-out in an axial direction of the output shaft (58) and is inserted in the through-hole (67), and
when the input shaft (66) rotates in the first direction, the projecting portion (95) moves, with respect to the input shaft (66), to a second direction end portion (67B) side of the through-hole (67), and is nipped by the friction member and the second direction end portion (67B) of the through-hole (67).

6. The seat lifter structure (20) of claim 5, wherein the friction member is a plate spring (96) whose length direction both ends are fixed to the wall surface of the length direction intermediate portion of the through-hole (67), and whose length direction intermediate portion is curved in a convex shape.

## Patentansprüche

1. Sitzanhebestruktur (20), umfassend:
eine Eingangswelle (66), die drehbar an einem Sitzkissen (24) eines Sitzes (22), der auf einen Fahrzeugkarosserieboden (40) gesetzt ist, bereitgestellt ist und die sich um eine Achse dreht, wenn eine Betätigungskraft von einer sitzenden Person erhalten wird,
eine Ausgangswelle (58), die mit der Eingangswelle (66) verbunden ist, und die, wenn sich die Eingangswelle (66) dreht, in eine selbe Richtung wie die Eingangswelle (66) dreht, und
einen Verbindungsmechanismus (46), der zwischen dem Fahrzeugkarosserieboden (40) und dem Sitzkissen (24) bereitgestellt ist und der mit der Ausgangswelle (58) verbunden ist, wenn die Ausgangswelle (58) in eine erste Richtung dreht, wobei der Verbindungsmechanismus (46) das Sitzkissen (24) abwärts in eine vertikale Fahrzeugkarosserierichtung in Bezug auf den Fahrzeugkarosserieboden (40) bewegt, und wenn die Ausgangswelle (58) in eine zweite Richtung dreht, die gegenüber der ersten Richtung ist, der Verbindungsmechanismus (46) das Sitzkissen (24) aufwärts in die vertikale Fahrzeugkarosserierichtung in Bezug auf den Fahrzeugkarosserieboden (40) bewegt;
und wobei die Sitzanhebestruktur (20) **dadurch gekennzeichnet ist, dass** sie ferner umfasst:
einen Anliege-Abschnitt (72A), der an der Ausgangswelle (58) bereitgestellt ist und der, wenn die Eingangswelle (66) in die erste Richtung dreht, an einer Reibfläche anliegt, die am Sitzkissen (24) oder an der Eingangswelle (66) bereitgestellt ist.

2. Sitzanhebestruktur (20) nach Anspruch 1, wobei
die Reibfläche eine äußere Umfangsfläche (70A) eines Reibelements (70) ist, die ringförmig ist und am Sitzkissen (24) befestigt ist,
der Anliege-Abschnitt (72A) durch ein bewegendes Element (72) strukturiert ist, das an der Ausgangswelle (58) bereitgestellt ist und sich in Annäherungsrichtungen bewegt und sich weg von der Reibfläche bewegt, und
eine äußere Umfangsfläche (72B) des bewegenden Elements (72) durch einen Abschnitt der Eingangswelle (66), die in die erste Richtung dreht, gedrückt wird und sich der Reibfläche annähert.

3. Sitzanhebestruktur (20) nach Anspruch 2, wobei
ein geneigter Abschnitt (84), der so geneigt ist, dass eine Höhe der äußeren Umfangsfläche (72B) des bewegenden Elements (72) höher wird, während es in die erste Richtung läuft, an der äußeren Umfangsfläche (72B) des bewegenden Elements (72) gebildet ist, und
einen gegengerichteter geneigter Abschnitt (86), der in eine Richtung gegenüber dem geneigten Abschnitt (84) geneigt ist, an einem Abschnitt der Eingangswelle (66) gebildet ist, wobei dieser Abschnitt den geneigten Abschnitt berührt.

4. Sitzanhebestruktur (20) nach Anspruch 2 oder Anspruch 3, wobei mehrere der bewegenden Elemente (72) an einer äußeren Umfangsseite des Reibelements (70) in einem Intervall in einer Umfangsrichtung des Reibelements (70) angeordnet sind.

5. Sitzanhebestruktur (20) nach Anspruch 1, wobei
ein Durchgangsloch (67), das in eine axiale Richtung der Eingangswelle (66) verläuft, und dessen Längenrichtung eine Drehrichtung der Eingangswelle ist, an der Eingangswelle (66) gebildet ist,
die Reibfläche eine äußere Umfangsfläche eines Reibelements ist, das elastisch verformbar ist und in einer konvexen Form an einer Wandfläche eines Zwischenabschnitts in Längenrichtung des Durchgangslochs (67) bereitgestellt ist,
der Anliege-Abschnitt durch einen hervorstehenden Abschnitt (95) strukturiert ist, der zylindrisch ist und in eine axiale Richtung von der Ausgangswelle (58) hervorsteht und in das Durchgangsloch (67) eingesetzt ist, und
wenn die Eingangswelle (66) in die erste Richtung dreht, der hervorstehende Abschnitt (95) sich in Bezug auf die Eingangswelle (66) zu einer Seite eines Endabschnitts (67B) in eine zweite Richtung des Durchgangslochs (67) bewegt, und vom Reibelement und dem Endabschnitt (67B) in die zweite Richtung des Durchgangslochs (67) erfasst wird.

6. Sitzanhebestruktur (20) nach Anspruch 5, wobei das Reibelement eine Tellerfeder ist (96), deren beiden Enden in Längenrichtung an der Wandfläche des Zwischenabschnitts in Längenrichtung des Durchgangslochs (67) befestigt sind, und deren Zwischenabschnitt in Längenrichtung in eine konvexe Form gebogen ist.

## Revendications

1. Structure de dispositif de levage de siège (20) comprenant :
un arbre d'entrée (66) qui est prévu, rotatif, sur un coussin de siège (24) d'un siège (22) qui est placé sur un plancher (40) de carrosserie de véhicule, et qui tourne autour d'un axe lorsqu'une force opérationnelle est reçue d'une personne assise ;
un arbre de sortie (58) qui est raccordé à l'arbre d'entrée (66), et qui, lorsque l'arbre d'entrée (66) tourne, tourne dans la même direction que l'arbre d'entrée (66) ; et
un mécanisme de liaison (46) qui est prévu entre le plancher (40) de carrosserie de véhicule et le coussin de siège (24), et est raccordé à l'arbre de sortie (58), lorsque l'arbre de sortie (58) tourne dans une première direction, le mécanisme de liaison (46) déplaçant le coussin de siège (24) vers le bas dans une direction verticale de carrosserie de véhicule par rapport au plancher (40) de carrosserie de véhicule, et lorsque l'arbre de sortie (58) tourne dans une seconde direction qui est opposée à la première direction, le mécanisme de liaison (46) déplaçant le coussin de siège (24) vers le haut dans la direction verticale de carrosserie de véhicule par rapport au plancher (40) de carrosserie de véhicule ; et
la structure de dispositif de levage de siège (20) étant **caractérisée en ce qu'**elle comprend en outre :
une partie aboutante (72A) qui est prévue sur l'arbre de sortie (58), et qui, lorsque l'arbre d'entrée (66) tourne dans la première direction, vient abouter une surface de friction qui est prévue sur le coussin de siège (24) ou l'arbre d'entrée (66).

2. Structure de dispositif de levage de siège (20) selon la revendication 1, dans laquelle :
la surface de friction est une surface périphérique externe (70A) d'un élément de friction (70) qui est annulaire et est fixée sur le coussin de siège (24),
la partie aboutante (72A) est structurée par un élément mobile (72) qui est prévu au niveau de l'arbre de sortie (58) et se déplace dans les directions d'approche et d'éloignement de la surface de friction, et
une surface périphérique externe (72B) de l'élément mobile (72) est poussée par une partie de l'arbre d'entrée (66) qui tourne dans la première direction, et s'approche de la surface de friction.

3. Structure de dispositif de levage de siège (20) selon la revendication 2, dans laquelle :
une partie inclinée (84) qui est inclinée de sorte qu'une hauteur de la surface périphérique externe (72B) de l'élément mobile (72) devient plus haute tout en allant dans la première direction, est formée sur la surface périphérique externe (72B) de l'élément mobile (72), et
une partie inclinée à l'opposé (86), qui est inclinée dans une direction opposée à la partie inclinée (84), est formée au niveau d'une partie de l'arbre d'entrée (66), laquelle partie est en contact avec la partie inclinée.

4. Structure de dispositif de levage de siège (20) selon la revendication 2 ou la revendication 3, dans laquelle une pluralité des éléments mobiles (72) sont disposés du côté périphérique externe de l'élément de friction (70) à un intervalle dans une direction périphérique de l'élément de friction (70).

5. Structure de dispositif de levage de siège (20) selon la revendication 1, dans laquelle :
un trou débouchant (67) qui traverse dans une direction axiale de l'arbre d'entrée (66) et dont la direction de longueur est une direction de rotation de l'arbre d'entrée, est formé sur l'arbre d'entrée (66),
la surface de friction est une surface périphérique externe d'élément de friction qui est élastiquement déformable et est prévue selon une forme convexe sur une surface de paroi d'une partie intermédiaire dans le sens de la longueur du trou débouchant (67),
la partie aboutante est structurée par une partie en saillie (95) qui est cylindrique est fait saillie vers l'extérieur dans la direction axiale de l'arbre de sortie (58) et est insérée dans le trou débouchant (67), et
lorsque l'arbre d'entrée (66) tourne dans la première direction, la partie en saillie (95) se déplace, par rapport à l'arbre d'entrée (66), du côté de la partie d'extrémité (67B) dans une seconde direction du trou débouchant (67), et est pincée par l'élément de friction et la partie d'extrémité (67B) de seconde direction du trou débouchant (67).

6. Structure de dispositif de levage de siège (20) selon la revendication 5, dans laquelle l'élément de friction est un ressort à lames (96) dont les deux extrémités dans le sens de la longueur sont fixées sur la surface de paroi de la partie intermédiaire dans le sens de la longueur du trou débouchant (67), et dont la partie intermédiaire dans le sens de la longueur est incurvée selon une forme convexe.
